# EUROPÄISCHE PATENTSCHRIFT

(11) **EP 3 523 206 B1**
(45) Veröffentlichungstag und Bekanntmachung des Hinweises auf die Patenterteilung: **09.12.2020**
(21) Anmeldenummer: 17791294.6
(22) Anmeldetag: 06.10.2017
(51) Int. Cl.: B65B 5/04

(54) **VERFAHREN UND VORRICHTUNG ZUM PORTIONIERTEN ABFÜLLEN VON FLACHEN PRODUKTEN**
METHOD AND APPARATUS FOR THE PORTIONED FILLING OF FLAT PRODUCTS
PROCÉDÉ ET DISPOSITIF DE CONDITIONNEMENT EN PORTIONS DE PRODUITS PLATS

(30) Priorität: 07.10.2016 DE 102016119112
(43) Veröffentlichungstag der Anmeldung: 14.08.2019
(73) Patentinhaber: Hastamat Verpackungstechnik GmbH, 35633 Lahnau (DE)
(72) Erfinder: LOEKOES, Peter, 35457 Lollar (DE); FISCHBUCH, Witali, 35239 Steffenberg (DE)
(74) Vertreter: advotec.
(86) Internationale Anmeldenummer: PCT/EP2017/075537
(87) Internationale Veröffentlichungsnummer: WO 2018/065600

(56) Entgegenhaltungen:
- EP-A1- 0 644 119
- US-A- 5 078 255
- US-A1- 2006 131 131
- US-A1- 2010 012 463
- US-A1- 2014 237 948

## Beschreibung

Die vorliegende Erfindung betrifft ein Verfahren zum portionierten Abfüllen von flachen Produkten nach Anspruch 1 sowie eine Vorrichtung zum portionierten Abfüllen von flachen Produkten nach Anspruch 5. Zur Verpackung von Kartoffelchips in Verpackungseinheiten ist es bekannt, die Kartoffelchips in dem Auslaufbereich einer Fritteuse auf eine Vielzahl von benachbart zueinander angeordneten Auslaufförderstrecken zu übergeben, welche in einem Bahnspreizungsabschnitt zur Vergrößerung des Abstands zwischen den Auslaufförderstrecken divergierend verlaufen und in voneinander beabstandete, benachbart nebeneinander und bevorzugt parallele Produktförderstrecken übergehen. Längs den Produktförderstrecken werden aus den kontinuierlich geförderten Kartoffelchips Produktportionen gebildet, die schließlich in einem Produktabfüllbereich in vereinzelte Verpackungsbehältnisse übergeben werden, die längs jeweils der einzelnen Produktförderstrecken zugeordneten Verpackungsbehälterförderstrecken aus dem Produktabfüllbereich abtransportiert werden.

US 2010/0012463 A1, US 2006/0131131 A1 und US 5,078,255 offenbaren Verfahren und Vorrichtungen zum portionierten Abfüllen von Produkten.

Insbesondere bei klein dimensionierten Verpackungsbehältnissen, die nur eine relativ geringe Stückzahl von Kartoffelchips aufnehmen können, ist die maximal erreichbare Ausbringung einer Verpackungsanlage bezogen auf die Produktmenge pro Verpackungsförderstrecke relativ gering. Insgesamt ergibt sich somit bei kleinen Abfüllmengen aufgrund der Vielzahl von Verpackungsförderstrecken ein unverhältnismäßig großer anlagentechnischer Aufwand.

Der vorliegenden Erfindung liegt daher die Aufgabe zugrunde, ein Verfahren sowie eine Vorrichtung zum portionierten Abfüllen von flachen Produkten vorzuschlagen, derart, dass der anlagentechnische Aufwand beim portionierten Abfüllen von flachen Produkten verringert wird.

Zur Lösung dieser Aufgabe weist das erfindungsgemäße Verfahren die Merkmale des Anspruchs 1 auf.

Bei dem erfindungsgemäßen Verfahren erfolgt zwischen einer Produktförderstrecke und zwei benachbart nebeneinander angeordneten Übergabeförderern einer Produktübergabeeinrichtung mittels einer Umverteilungseinrichtung eine Aufteilung der über die Produktförderstrecke zugeförderten Produktportionen auf die Übergabeförderer, derart, dass während des Auftretens einer Förderlücke zwischen zwei auf der Produktförderstrecke geförderten Produktportionen eine Umschaltung der Umverteilungseinrichtung aus einer ersten Verbindungskonfiguration zur Herstellung einer Förderverbindung zwischen der Produktförderstrecke und dem ersten Übergabeförderer und einer zweiten Verbindungskonfiguration zur Herstellung einer Förderverbindung zwischen der Produktförderstrecke und dem zweiten Übergabeförderer erfolgt, wobei die Produktportionen in ihrer Geschwindigkeit auf unterschiedlich langen Förderstrecken der Übergabeförderer mit einer Synchronisierungseinrichtung derart beeinflusst werden, dass die Produktportionen am Ende eines Vorschubtaktes einer quer zu den Produktförderstrecken längs einer Verpackungsförderstrecke getaktet vorbewegten Verpackungseinheit mit in Spalten und Reihen einer Verpackungsbehältermatrix der Verpackungseinheit angeordneten Verpackungsbehältern die Produktportionen aus einer Übergabeposition in die Verpackungsbehälter übergeben werden.

Erfindungsgemäß erfolgt daher in Folge der Aufteilung von über die Produktförderstrecken geförderten Produktportionen auf eine Mehrzahl von Übergabeförderern in Kombination mit der Bereitstellung einer Verpackungseinheit mit einer Vielzahl in Matrixanordnung angeordneten Verpackungsbehältern bei nur einer Verpackungsförderstrecke eine wesentliche Erhöhung der auf die Verpackungseinheit beziehungsweise die Verpackungsförderstrecke bezogene Abfüllleistung. Anstatt einer Vielzahl von Verpackungsförderstrecken, die jeweils zur Förderung von Verpackungseinheiten mit geringem Produktaufnahmevermögen dienen, ist bei Durchführung des erfindungsgemäßen Verfahrens lediglich eine Verpackungsförderstrecke ausreichend, sodass ein entsprechend geringer anlagentechnischer Aufwand als Voraussetzung für die Durchführung des Verfahrens notwendig ist.

Vorzugsweise entspricht die im Vorschubtakt längs der Verpackungsförderstrecke ausgeführte Vorschubbewegung dem Produkt aus dem Spaltenabstand der Verpackungsbehältermatrix und der Spaltenanzahl der Verpackungsbehältermatrix.

Wenn während der Förderung der Produktportionen auf den Übergabeförderern die Herstellung von Verpackungseinheiten in einem Verpackungsbehälterherstellungsabschnitt der Verpackungsförderstrecke erfolgt, ist die besonders vorteilhafte Integration der Verpackungsbehälterherstellung in das Abfüllverfahren möglich.

Vorzugsweise werden in dem Verpackungsbehälterherstellungsabschnitt der Verpackungsförderstrecke Verpackungseinheiten mit in einer Verpackungsbehältermatrix angeordneten Verpackungsbehältern in einem Thermoformverfahren aus Kunststofffolie hergestellt und jeweils nach Herstellung einer Verpackungsbehältereinheit werden mit einer dem Produkt aus dem Spaltenabstand und der Spaltenanzahl entsprechenden Vorschubbewegung die Verpackungseinheiten getaktet in einen Produktübergabebereich der Produktübergabeeinrichtung vorbewegt.

Die erfindungsgemäße Vorrichtung weist die Merkmale des Anspruchs 5 auf.

Erfindungsgemäß weist die Vorrichtung eine Produktübergabeeinrichtung zur Übergabe der Produktportionen in Verpackungsbehälter auf, wobei jeweils zwischen einer Produktförderstrecke und zwei benachbart nebeneinander angeordneten Übergabeförderern eine Umverteilungseinrichtung vorgesehen ist, die zwischen einer ersten Verbindungskonfiguration zur Herstellung einer Förderverbindung zwischen der Produktförderstrecke und dem ersten Übergabeförderer und einer zweiten Verbindungskonfiguration zur Herstellung einer Förderverbindung zwischen der Produktförderstrecke und dem zweiten Übergabeförderer umschaltbar ist, wobei die unterschiedlich lange Förderstrecken aufweisenden Übergabeförderer der Produktübergabeeinrichtung jeweils mit einer Synchronisierungseinrichtung versehen sind zur synchronisierten Ankunft der Produktportionen in einer Übergabeposition an einem Übergabeende der Übergabeförderer, und einen Verpackungsförderer zur getakteten Förderung von Verpackungseinheiten mit in einer Verpackungsbehältermatrix angeordneten Verpackungsbehältern längs einer quer zu den Produktförderstrecken angeordneten Verpackungsförderstrecke.

Vorzugsweise ist in einem Verpackungsbehälterherstellungsabschnitt der Verpackungsförderstrecke eine Thermoformeinrichtung vorgesehen zur Herstellung von Verpackungseinheiten mit den einer Verpackungsbehältermatrix angeordneten Verpackungsbehältern aus Kunststofffolie.

Wenn die Produktübergabeeinrichtung zumindest eine Übergabeeinheit mit einer Mehrzahl von Übergabeförderern aufweist, die Förderstrecken mit unterschiedlichen Längen ausbilden, derart, dass die Übergabeenden der Übergabeförderer auf einer unter einem Übergabewinkel zur Förderrichtung des Verpackungsförderers geneigten Übergabelinie angeordnet sind, können gleichzeitig Verpackungsbehälter der Verpackungseinheit befüllt werden, die sich in unterschiedlichen Reihen und Spalten der Matrixanordnung der Verpackungseinheit befinden.

Vorzugsweise bildet der in Förderrichtung vorderste Übergabeförderer einer Übergabeeinheit die kürzeste Förderstrecke der Übergabeeinheit und der in Förderrichtung hinterste Übergabeförderer die längste Förderstrecke der Übergabeeinheit aus.

Vorzugsweise ist jeder Übergabeeinheit eine Anzahl von Produktförderern zugeordnet, die der Hälfte der Anzahl der Übergabeförderer entspricht.

Wenn die Anzahl der Übergabeeinheiten der Produktübergabeeinrichtung der Anzahl der in quer zur Förderrichtung ausgerichteten Spalten angeordneten Formstempeln eines Formwerkzeugs der Thermoformeinrichtung mit in Matrixform angeordneten Formstempeln entspricht, und die Anzahl der Übergabeförderer der Übergabeeinheiten der Anzahl der in Förderrichtung ausgerichteten Reihen der Formstempel entspricht, ist eine optimale Anpassung der Vorrichtung an die Matrix der Verpackungseinheit möglich.

Die Umverteilungseinrichtung kann als eine in der Horizontalebene verschwenkbare Fördereinrichtung ausgebildet sein, die vorzugsweise als Förderbandeinrichtung ausgebildet ist.

Die Synchronisierungseinrichtung der Übergabeförderer der Produktübergabeeinrichtung kann als eine um eine horizontale Achse in Förderrichtung der Übergabeförderer verschwenkbare Anschlageinrichtung ausgebildet sein.

Eine weitere vorteilhafte Ausführungsform der Synchronisierungseinrichtung ist als eine oberhalb der Übergabeförderer angeordnete und in Förderrichtung umlaufende Förderbandeinrichtung ausgebildet, die zumindest zwei in ihrem Abstand zueinander veränderbare und unabhängig voneinander bewegbare Anschlageinrichtungen aufweist, sodass die Synchronisierungseinrichtung die für die Abfüllung vorgesehene Produktportionen wahlweise längs der Förderstrecke der Übergabeförderer beschleunigen oder verlangsamen kann.

Vorzugsweise ist zur Einfüllung von Produktportionen vom Übergabeende der Übergabeförderer in einen Verpackungsbehälter der Verpackungseinheit ein Einführungselement vorgesehen.

Wenn das Einführungselement um eine horizontale Achse verschwenkbar ist, kann eine Anpassung der Position des Einführungselements an die Position des Verpackungsbehälters vorgenommen werden.

Besonders vorteilhaft ist es, wenn das Einführungselement zwischen einem Übergabeende des Übergabeförderers und einen die Förderstrecke des Übergabeförderers verlängernden Weiterführungselement angeordnet ist, derart, dass das Einführungselement zwischen einer Einfüllposition zur Einfüllung der Produktportionen in dem Verpackungsbehälter und einer Weiterführungsposition zur Weiterführung der Produktportionen verschwenkbar ist, sodass etwa für den Fall, dass Störungen bei der Herstellung der Verpackungseinheiten auftreten, die von den Übergabeförderern in den Produktübergabebereich geförderten Produktportionen aus dem Abfüllvorgang ausgeschleust werden können.

Nachfolgend wird eine bevorzugte Variante des Verfahrens sowie eine vorteilhafte Ausführungsform der dabei zum Einsatz kommenden Vorrichtung anhand der Zeichnung näher erläutert.

Es zeigen:
- **Fig. 1**: eine schematische Darstellung der Schnittstelle zwischen dem Verfahren zum portionierten Abfüllen von flachen Produkten und einer Vielzahl von parallel zueinander angeordneten Auslaufförderstrecken im Auslaufbereich einer Fritteuse;
- **Fig. 2**: eine am Beispiel einer Produktförderstrecke ausgebildete Vorrichtung zum portionierten Abfüllen von flachen Produkten;
- **Fig. 3**: die in **Fig. 2** dargestellte Vorrichtung in isometrischer Darstellung mit einer ersten Ausführung einer oberhalb von Übergabeförderern einer Produktübergabeeinrichtung angeordneten Synchronisierungseinrichtung;
- **Fig. 4**: eine schematische Darstellung der in **Fig. 3** dargestellten Synchronisierungseinrichtung;
- **Fig. 5**: eine zwischen der Produktförderstrecke und der Produktübergabeeinrichtung der in **Fig. 3** dargestellten Vorrichtung angeordnete Umverteilungseinrichtung in vergrößerter Darstellung;
- **Fig. 6**: eine Ausführung der in **Fig. 3** dargestellten Vorrichtung mit einer weiteren Ausführungsform einer Umverteilungseinrichtung;
- **Fig. 7**: eine vergrößerte Darstellung der in **Fig. 6** dargestellten Umverteilungseinrichtung;
- **Fig. 8**: eine an eine Produktübergabeeinrichtung in einem Produktübergabebereich ausgebildete Produkteinfülleinrichtung mit den einzelnen Übergabeförderern der Produktübergabeeinrichtung zugeordneten Führungselementen;
- **Fig. 9**: ein Führungselement in einer Einfüllposition;
- **Fig. 10**: das in **Fig. 9** dargestellte Führungselement in einer Weiterführungsposition;
- **Fig. 11**: eine schematische Darstellung der an eine Mehrzahl von Produktförderstrecken anschließend ausgebildete Produktübergabeeinrichtung mit Darstellung der Umverteilung von längs Produktförderstrecken geförderten Produktportionen auf jeweils zwei Übergabeförderer der Produktübergabeeinrichtung ausgehend von drei Produktförderstrecken;
- **Fig. 12**: die portionierte Abfüllung in eine Verpackungseinheit mit einer 3x6-Verpackungsbehälter umfassenden Verpackungsbehältermatrix unmittelbar vor Abfüllung der ersten Produktportionen;
- **Fig. 13**: den Abfüllvorgang unmittelbar nach Abfüllung der ersten Produktportionen;
- **Fig. 14**: eine Übergangsphase des Abfüllvorgangs;
- **Fig. 15**: eine Endphase der Befüllung der Verpackungseinheit;
- **Fig. 16**: eine Übergangsphase nach erfolgter Abfüllung einer ersten Verpackungseinheit;
- **Fig. 17**: eine Umverteilung von längs zwei Produktförderstrecken geförderten Produktportionen zur Befüllung einer Verpackungseinheit, die eine Verpackungsbehältermatrix mit 1x4-Verpackungsbehältern umfasst;
- **Fig. 18**: eine Umverteilung von längs vier Produktförderstrecken geförderten Produktportionen zur Befüllung einer Verpackungseinheit, die eine Verpackungsbehältermatrix mit 2x4-Verpackungsbehältern umfasst;
- **Fig. 19**: eine Umverteilung von längs sechs Produktförderstrecken geförderten Produktportionen zur Befüllung einer Verpackungseinheit, die eine Verpackungsbehältermatrix mit 3x4-Verpackungsbehältern umfasst;
- **Fig. 20**: eine Umverteilung von längs drei Produktförderstrecken geförderten Produktportionen zur Befüllung einer Verpackungseinheit, die eine Verpackungsbehältermatrix mit 1x6-Verpackungsbehältern umfasst;
- **Fig. 21**: eine Umverteilung von längs sechs Produktförderstrecken geförderten Produktportionen zur Befüllung einer Verpackungseinheit, die eine Verpackungsbehältermatrix mit 2x6-Verpackungsbehältern umfasst.

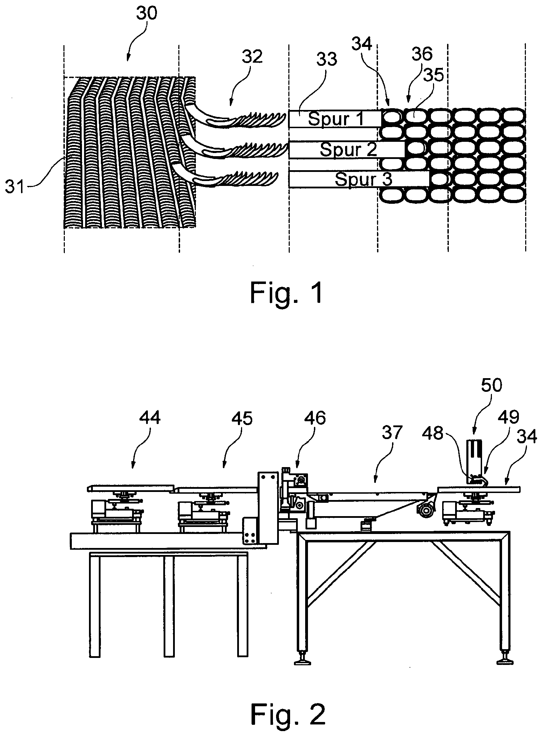

**Fig. 1** zeigt einen Auslaufbereich 30 einer hier nicht näher dargestellten Fritteuse mit einer Vielzahl von parallel zueinander angeordneten Auslaufförderstrecken 31, die nachfolgend einem Bahnspreizungsabschnitt 32 in benachbart und mit Abstand zueinander angeordnete Produktförderstrecken 33 übergehen, welche zu einer in **Fig. 1** lediglich schematisch dargestellten Produktübergabeeinrichtung 34 führen, die eine Abfüllung von Produktportionen 47 in Verpackungsbehälter 35 einer die Verpackungsbehälter 35 in einer Matrixanordnung aufweisenden Verpackungseinheit 36 ermöglichen.

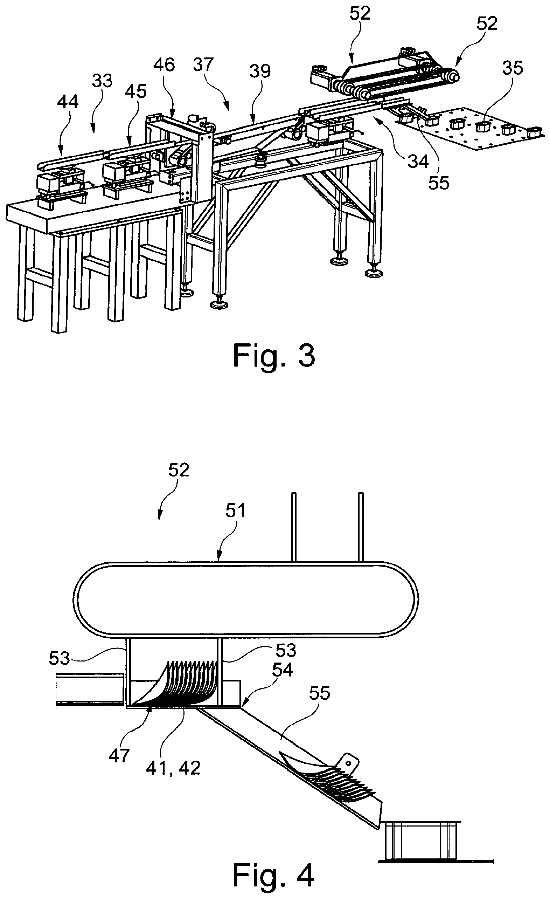

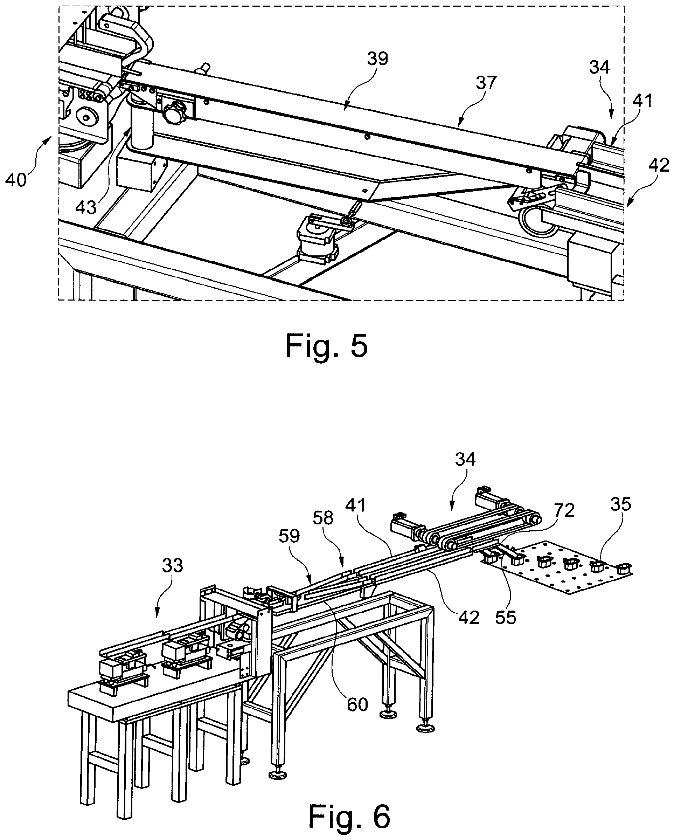

**Fig. 2** zeigt eine in Förderrichtung anschließend an die Produktförderstrecke 33 ausgebildete Produktübergabeeinrichtung 34 mit einer zwischen der Produktförderstrecke 33 und der Produktübergabeeinrichtung 34 angeordneten Umverteilungseinrichtung 37, die, wie insbesondere einer Zusammenschau der **Fig. 3** und **5** zu entnehmen ist, eine in einer Horizontalebene verschwenkbare Förderbandeinrichtung 39 umfasst. Wie insbesondere **Fig. 5** zeigt, ist die Förderbandeinrichtung 39 um eine vertikale Schwenkachse 43 zwischen zwei Verbindungskonfigurationen verschwenkbar, welche zum einen die in **Fig. 5** dargestellte Verbindungskonfiguration ermöglicht, in der die Förderbandeinrichtung 39 eine Förderverbindung zwischen einer die Förderstrecke 33 ausbildenden Produktfördereinrichtung 40 und einem ersten Übergabeförderer 41 der Produktübergabeeinrichtung 34 ermöglicht, und in der zweiten Verbindungskonfiguration, die hier nicht näher dargestellt ist, eine Förderverbindung zwischen der Produktfördereinrichtung 40 und einem zweiten Übergabeförderer 42, der benachbart und beabstandet zum ersten Übergabeförderer 41 angeordnet ist, ermöglicht.

Wie **Fig. 3** zeigt, ist die Produktfördereinrichtung 40 im vorliegenden Fall aus zwei hintereinander in Reihe liegend angeordneten Vibrationsförderrinnen 44 und 45 sowie einer als Wiegeeinrichtung 46 ausgestalteten Förderbandeinrichtung gebildet, wobei die erste Vibrationsförderrinne 44 für eine im Wesentlichen gleichmäßige Verteilung von in einer kontinuierlichen Reihe geförderten Kartoffelchips sorgt und die nachfolgend angeordnete Vibrationsförderrinne 45 mittels eines in Ein- und Ausschaltzeiten aufgeteilten, getakteten Betriebs die Ausbildung von Produktportionen 47 ermöglicht, die auf der Wiegeeinrichtung 46 weiter gefördert und gleichzeitig gewogen werden, um bei von einem Sollgewicht abweichenden Portionsgewicht durch eine Änderung des getakteten Betriebs der Vibrationsförderrinne 45 die Anzahl der die Produktportionen 47 ausbildenden Kartoffelchips zu verändern. Zwischen der Wiegeeinrichtung 46 und der Produktübergabeeinrichtung 34 befindet sich die vorstehend erläuterte Umverteilungseinrichtung 37, mittels der abwechselnd eine Produktportion 47 dem in **Fig. 5** in Förderrichtung linken Übergabeförderer 41 und die nachfolgende Produktportion 47 nach Umschwenken der Umverteilungseinrichtung 37 zu dem in **Fig. 5** rechten Übergabeförderer 42 auf dem Übergabeförderer 42 weitergefördert wird. Beide Übergabeförderer 41, 42 sind im vorliegenden Fall als Vibrationsförderrinne ausgebildet.

Die Übergabeförderer 41 und 42 sind jeweils mit einer in **Fig. 2** dargestellten Synchronisierungseinrichtung 50 versehen, die einen um eine horizontale Schwenkachse 48 verschwenkbaren Stoppanschlag 49 aufweist, oder mit einer Synchronisierungseinrichtung 52 versehen, die als eine oberhalb des jeweiligen Übergabeförderers 41, 42 angeordnete und in Förderrichtung umlaufenden Förderbandeinrichtung 51 ausgebildet ist, wobei, wie in der schematischen Darstellung gemäß **Fig. 4** dargestellt, an der Förderbandeinrichtung 51 eine Mehrzahl von jeweils mit einem Förderband der Förderbandeinrichtung 51 verbundenen Anschlageinrichtungen 53 angeordnet ist, die unabhängig voneinander bewegbar sind, wobei jeweils zwei Anschlageinrichtungen 53 eine Produktportion 47 zwischen sich aufnehmen und deren Förderung auf dem Übergabeförderer 41, 42 verzögern oder beschleunigen können, um die Ankunftszeit der Produktportionen 47 an einem Übergabeende 54 des Übergabeförderers 41, 42 beeinflussen zu können. Im Unterschied hierzu ermöglicht die in **Fig. 2** dargestellte Synchronisierungseinrichtung 50 mit dem um eine raumfeste Schwenkachse 48 verschwenkbar angeordneten Stoppanschlag 49 lediglich eine Verzögerung der Förderung der Produktportionen 47 auf dem Übergabeförderer 41, 42.

Wie weiter in den **Fig. 3** und **4** dargestellt, ist jeweils an einem Übergabeende 54 der Übergabeförderer 41, 42 ein Einführungselement 55 vorgesehen, das ein gezieltes Einfüllen der vom Übergabeende 54 herunterfallenden Produktportionen 47 in in einem Übergabebereich 56 bereit gestellte Verpackungsbehälter 35 ermöglicht.

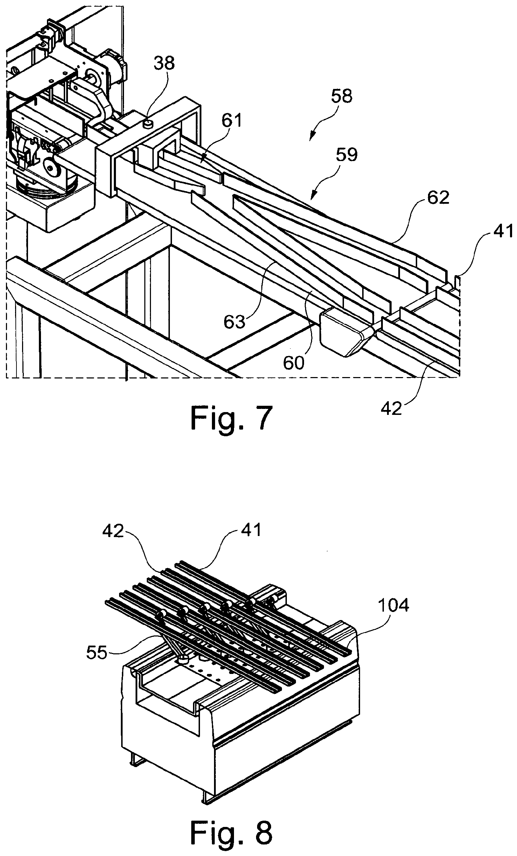

In den **Fig. 6** und **7** ist zwischen der Produktförderstrecke 33 und den Übergabeförderern 41, 42 der Produktübergabeeinrichtung 34 eine Umverteilungseinrichtung 58 vorgesehen, die eine Weichenanordnung 59 aufweist mit einer in ihrer Position konstant angeordneten Förderbandeinrichtung 60, auf der ein um eine vertikale Schwenkachse 38 horizontal verschwenkbares Schaltelement 61 eine abwechselnde Verteilung von Produktportionen 47, die längs der Produktförderstrecke 33 zugefördert wurden, auf V-förmig zueinander angeordnete Führungsschienen 62, 63 ermöglicht, die jeweils eine Förderverbindung zu den nachfolgend angeordneten Übergabeförderern 41 bzw. 42 ermöglichen.

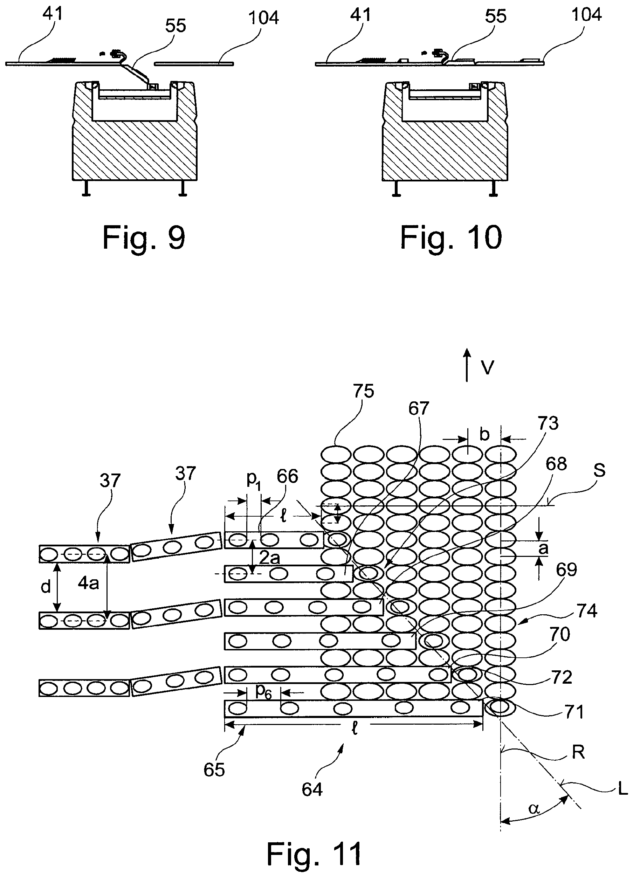

**Fig. 11** zeigt in einer schematischen Darstellung drei benachbart in einem Produktförderstreckenabstand 4a parallel zueinander angeordnete Produktförderstrecken 33, die jeweils über eine Umverteilungseinrichtung 37 abwechselnd mit einem Übergabeförderer 66 oder 67 bzw. 68 oder 69 bzw. 70 oder 71 verbunden sind, wobei die Übergabeförderer 66 bis 71 zusammen die Produktübergabeeinrichtung 65 ausbilden. Die Übergabeförderer 66 bis 71 sind unterschiedlich lang ausgebildet und enden mit ihren Übergabeenden 72 in einem Übergabebereich 73, der im vorliegenden Fall oberhalb eines Verpackungsbehälterstrangs 74 angeordnet ist, der eine Vielzahl von einstückig miteinander verbundenen und in Matrixform angeordneten Verpackungsbehältern 75 aufweist. Aus Gründen der vereinfachten Darstellung ist bei dem in **Fig. 11** dargestellten Ausführungsbeispiel eine Übergabe der längs der Übergabeförderer 66 bis 71 geförderten Produktportionen 47 unmittelbar in die jeweils unterhalb der Übergabeenden 72 angeordneten Verpackungsbehälter 75 dargestellt, ohne dass ein Einführungselement 55, wie etwa in **Fig. 6** vorgesehen, am Übergabeende 72 angeordnet wäre.

Wie **Fig. 11** zeigt, befinden sich die Übergabeförderer 66 bis 71 jeweils in einem Abstand 2a voneinander, also dem zweifachen Abstand a, den die Spalten S der Matrixanordnung der Verpackungsbehälter 75 voneinander aufweisen. Weiterhin ist aus **Fig. 11** ersichtlich, dass die Übergabeenden 72 benachbarter Übergabeförderer 66 bis 71 jeweils einen Abstand b voneinander aufweisen, der dem Reihenabstand b der in Reihen R angeordneten Verpackungsbehälter 75 entspricht. Dabei befinden sich die Übergabeenden 72 auf einer Übergabelinie, die unter einem Übergabewinkel α zu einer Förderrichtung V der Verpackungsbehälter 75 geneigt ist. Der in Förderrichtung V vorderste Übergabeförderer 66 weist dabei die kürzeste Förderlänge 1 auf und der in Förderrichtung V hinterste Übergabeförderer 71 weist die längste Förderlänge 1 auf.

Wie aus den zwischen den einzelnen Produktportionen 47 ausgebildeten Abständen p deutlich wird, erfolgt grundsätzlich aufgrund der alternierenden Verteilung von auf den Umverteilungseinrichtungen 37 geförderten Produktportionen 47 auf die jeweils zugeordneten Übergabeförderer 66, 67 bzw. 68, 69 bzw. 70, 71 eine Vergrößerung der Portionsabstände. Darüber hinaus ist auch festzustellen, dass die Abstände zwischen den Produktportionen 47, beginnend mit einem Abstand p1 auf dem Übergabeförderer 66 bis hin zu einem Portionsabstand p6 auf dem Übergabeförderer 71, zunehmend größer werden, wobei die Vergrößerung der Portionsabstände p mittels der Synchronisierungseinrichtung 50 erfolgt mit dem Ziel, dass die Übergabeenden 72 der Übergabeförderer 66 bis 71 von den auf den jeweiligen Übergabeförderern 66 bis 71 geförderten Produktportionen 47 im Wesentlichen zum selben Zeitpunkt erreicht werden, sodass eine gleichzeitige Übergabe der jeweils am Übergabeende 72 angeordneten Produktportionen 47 in die Verpackungsbehälter 75 erfolgen kann.

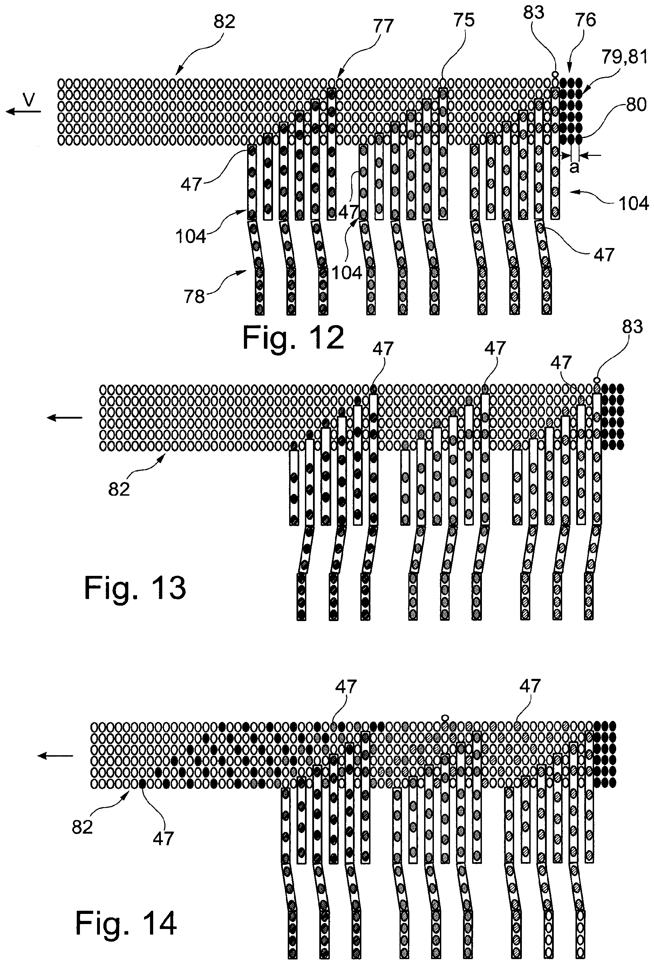

In den **Fig. 12** bis **16** ist beispielhaft eine Befüllung von Verpackungsbehältern 75 mit Produktportionen 47 dargestellt, die mittels eines Formwerkzeugs 79 in einer Matrixanordnung hergestellt werden, derart, dass in einem Verpackungsbehälterherstellungsabschnitt 76 einer Verpackungsförderstrecke 77 längs der Verpackungsförderrichtung V die getaktet vorbewegten Verpackungsbehälter 75 mittels einer drei Übergabeeinheiten 64 mit jeweils sechs Übergabeförderern 66 bis 71 aufweisenden Produktübergabeeinrichtung 78 befüllt werden.

In **Fig. 12** ist im Verpackungsbehälterherstellungsabschnitt 76 schematisch das Formwerkzeug 79 einer Thermoformeinrichtung dargestellt, die die Einformung von Verpackungsbehältern 75 in eine längs der Verpackungsförderstrecke 77 geförderte, nicht näher dargestellte Folienbahn ermöglicht. In dem in den **Fig. 12** bis **16** dargestellten Ausführungsbeispiel umfasst das Formwerkzeug 79 achtzehn in einer Matrixanordnung angeordnete Formstempel 80, die eine gleichzeitige Herstellung von in einer entsprechenden Matrixanordnung angeordneten Verpackungsbehältern 75 als eine Verpackungseinheit 81 ermöglicht. Jeweils nach Herstellung einer Verpackungseinheit 81 wird diese um einen Vorschubtakt längs der Verpackungsförderstrecke 77 vorbewegt, wobei grundsätzlich die dabei ausgeführte Vorschubbewegung dem Produkt aus dem Spaltenabstand a der Matrixanordnung und der Spaltenanzahl der Matrixanordnung entspricht. Im Fall des dargestellten Ausführungsbeispiels erfolgt also jeweils nach Herstellung einer Verpackungseinheit 81 eine Vorschubbewegung, die das Dreifache des Spaltenabstands a, also 3a, beträgt.

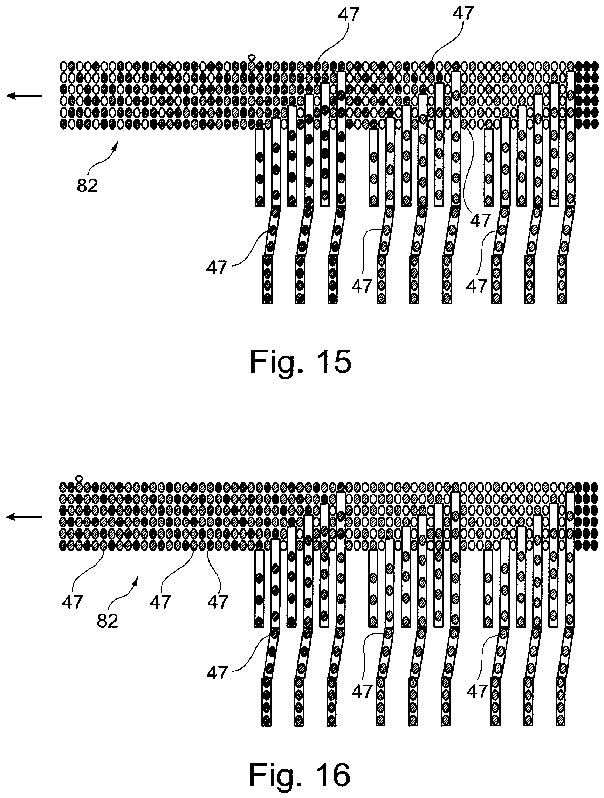

In den **Fig. 12** bis **16** ist der Taktfortschritt anhand exemplarisch dargestellter während des Taktfortschritts erreichter Befüllungszustände eines getaktet hergestellten Verpackungsbehälterstrangs 82 dargestellt, wobei der jeweilige Taktfortschritt durch die am Verpackungsbehälterstrang 82 ausgebildete Vorschubmarkierung 83 verdeutlicht wird. Dabei zeigt **Fig. 12** einen mittels des Formwerkzeugs 79 im Verpackungsbehälterherstellungsabschnitt 76 getaktet hergestellten Verpackungsbehälterstrang 82 am Anfang eines Befüllungsvorgangs, in dem noch sämtliche Verpackungsbehälter 75 leer sind. Mit fortschreitendem Taktvorschub wird eine zunehmende Befüllung der im Verpackungsbehälterstrang 82 ausgebildeten Verpackungsbehälter 75 erreicht, bis schließlich nach einer Einlaufphase, deren Ende in **Fig. 16** dargestellt ist, eine fortlaufende vollständige Befüllung sämtlicher Verpackungsbehälter 75 des Verpackungsbehälterstrangs 82 erreicht wird.

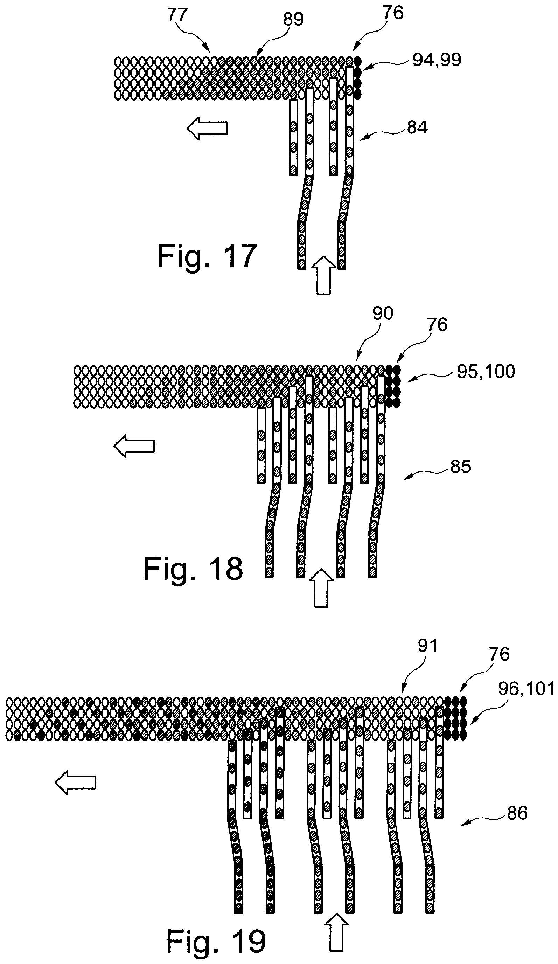

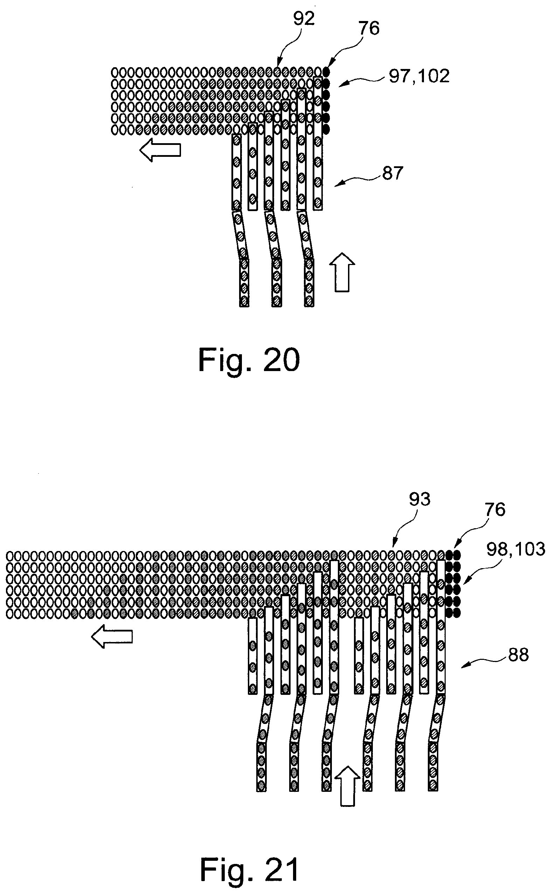

In den **Fig. 17** bis **21** sind alternative Ausführungsformen von Produktübergabeeinrichtungen 84 bis 88 dargestellt, die zur Befüllung von Verpackungsbehältersträngen 89 bis 93 dienen, die jeweils in einem Verpackungsbehälterherstellungsabschnitt 76 der Verpackungsförderstrecke 77 mit unterschiedlichen Formwerkzeugen 94 bis 98 hergestellte Verpackungseinheiten 99 bis 103 mit unterschiedlicher Matrixform aufweisen, sodass bei den Vorschubtakten entsprechend unterschiedliche Vorschubbewegungen ausgeführt werden, die dem Produkt aus dem Spaltenabstand a und der Spaltenanzahl der Verpackungsbehältermatrix entsprechen. So wird bei den in den **Fig. 17** und **20** dargestellten Verpackungsbehältersträngen 89 und 92 bei einem Vorschubtakt eine Vorschubbewegung entsprechend dem einfachen Spaltenabstand a und bei den in den **Fig. 18** und **21** dargestellten Verpackungsbehältersträngen 90 und 93 bei einem Vorschubtakt eine Vorschubbewegung entsprechend dem zweifachen Spaltenabstand a ausgeführt, wohingegen bei dem in **Fig. 19** dargestellten Verpackungsbehälterstrang 91 bei einem Vorschubtakt eine Vorschubbewegung entsprechend dem dreifachen Spaltenabstand a ausgeführt wird.

Die **Fig. 8** bis **10** zeigen in Ergänzung der in den **Fig. 3** und **6** dargestellten Ausführungsformen die Anordnung der Einführungselemente 55 zwischen den Übergabeenden 72 der Übergabeförderer 41, 42 und die Förderstrecken der Übergabeförderer 41, 42 verlängernden Weiterführungselementen 104, derart, dass die Einführungselemente 55 zwischen einer Einfüllposition zur Einfüllung der Produktportionen 47 in die Verpackungsbehälter 35 und einer Weiterführungsposition zur Weiterführung der Produktportionen 47 verschwenkbar sind.

## Patentansprüche

1. Verfahren zum portionierten Abfüllen von flachen Produkten, wie Kartoffelchips, bei dem die Produkte als Produktportionen (47) längs einer Mehrzahl von benachbart nebeneinander angeordneten Produktförderstrecken (33) an eine Produktübergabeeinrichtung (34) zur Übergabe der Produktportionen (47) in Verpackungsbehälter (35, 75) befördert werden, wobei jeweils zwischen einer Produktförderstrecke und zwei benachbart nebeneinander angeordneten Übergabeförderern (41, 42) der Produktübergabeeinrichtung (34) mittels einer Umverteilungseinrichtung (37, 58) eine Aufteilung der über die Produktförderstrecke zugeförderten Produktportionen (47) auf die Übergabeförderer (41, 42) erfolgt, derart, dass während des Auftretens einer Förderlücke zwischen zwei auf der Produktförderstrecke (33) geförderten Produktportionen (47) eine Umschaltung der Umverteilungseinrichtung (37, 58) aus einer ersten Verbindungskonfiguration zur Herstellung einer Förderverbindung zwischen der Produktförderstrecke (33) und dem ersten Übergabeförderer (41) und einer zweiten Verbindungskonfiguration zur Herstellung einer Förderverbindung zwischen der Produktförderstrecke (33) und dem zweiten Übergabeförderer (42) erfolgt, wobei die Produktportionen (47) in ihrer Geschwindigkeit auf unterschiedlich langen Förderstrecken der Übergabeförderer (41, 42) mittels einer Synchronisierungseinrichtung (50, 52) derart beeinflusst werden, dass die Produktportionen (47) am Ende eines Vorschubtaktes einer quer zu den Produktförderstrecken (33) längs einer Verpackungsförderstrecke (77) getaktet vorbewegten Verpackungseinheit (81) mit in Spalten und Reihen einer Verpackungsbehältermatrix der Verpackungseinheit angeordneten Verpackungsbehältern (35, 75) die Produktportionen (47) aus einer Übergabeposition in die Verpackungsbehälter (35, 75) übergeben werden.

2. Verfahren nach Anspruch 1,
**dadurch gekennzeichnet,**
**dass** die im Vorschubtakt längs der Verpackungsförderstrecke (77) ausgeführte Vorschubbewegung dem Produkt aus dem Spaltenabstand a der Verpackungsbehältermatrix und der Spaltenanzahl der Verpackungsbehältermatrix entspricht.

3. Verfahren nach Anspruch 2,
**dadurch gekennzeichnet,**
**dass** während der Förderung der Produktportionen (47) auf den Übergabeförderern (41, 42) die Herstellung von Verpackungseinheiten (81) in einem Verpackungsbehälterherstellungsabschnitt (76) der Verpackungsförderstrecke (77) erfolgt.

4. Verfahren nach Anspruch 3,
**dadurch gekennzeichnet,**
**dass** in dem Verpackungsbehälterherstellungsabschnitt (76) der Verpackungsförderstrecke (77) aus Kunststofffolie in einem Thermoformverfahren Verpackungseinheiten (81) mit in einer Verpackungsbehältermatrix angeordneten Verpackungsbehältern (75) hergestellt und jeweils nach Herstellung einer Verpackungsbehältereinheit (81) mit einer dem Produkt aus dem Spaltenabstand a und der Spaltenanzahl entsprechenden Vorschubbewegung getaktet in einen Produktübergabebereich (73) der Produktübergabeeinrichtung (78) vorbewegt werden.

5. Vorrichtung zum portionierten Abfüllen von flachen Produkten, wie Kartoffelchips, aufweisend eine Mehrzahl von benachbart nebeneinander angeordneten Produktförderstrecken (33) zur Förderung von Produktportionen (47) und eine Produktübergabeeinrichtung (34, 78) zur Übergabe der Produktportionen (47) in Verpackungsbehälter (35, 75), wobei jeweils zwischen einer Produktförderstrecke (33) und zwei benachbart nebeneinander angeordneten Übergabeförderern (41, 42) eine Umverteilungseinrichtung (37, 58) vorgesehen ist, die zwischen einer ersten Verbindungskonfiguration zur Herstellung einer Förderverbindung zwischen der Produktförderstrecke (33) und dem ersten Übergabeförderer (41) und einer zweiten Verbindungskonfiguration zur Herstellung einer Förderverbindung zwischen der Produktförderstrecke (33) und dem zweiten Übergabeförderer (42) umschaltbar ist, wobei die unterschiedlich lange Förderstrecken aufweisenden Übergabeförderer (41, 42) der Produktübergabeeinrichtung (34) jeweils mit einer Synchronisierungseinrichtung (50, 52) versehen sind zur synchronisierten Ankunft der Produktportionen (47) in einer Übergabeposition an einem Übergabeende (72) der Übergabeförderer (41, 42), und mit einem Verpackungsförderer zur getakteten Förderung von Verpackungseinheiten (81) mit in einer Verpackungsbehältermatrix angeordneten Verpackungsbehältern (75) längs einer quer zu den Produktförderstrecken angeordneten Verpackungsförderstrecke (77).

6. Vorrichtung nach Anspruch 5,
**dadurch gekennzeichnet,**
**dass** in einem Verpackungsbehälterherstellungsabschnitt (76) der Verpackungsförderstrecke (77) eine Thermoformvorrichtung vorgesehen ist zur Herstellung von Verpackungseinheiten (81) mit in einer Verpackungsbehältermatrix angeordneten Verpackungsbehältern (75) aus Kunststofffolie.

7. Vorrichtung nach Anspruch 5 oder 6,
**dadurch gekennzeichnet,**
**dass** die Produktübergabeeinrichtung (34, 78) zumindest eine Übergabeeinheit (64) mit einer Mehrzahl von Übergabeförderern (41, 42) aufweist, die Förderstrecken mit unterschiedlichen Längen ausbilden, derart, dass die Übergabeenden (72) der Übergabeförderer (41, 42) auf einer unter einem Übergabewinkel α zur Förderrichtung V des Verpackungsförderers geneigten Übergabelinie angeordnet sind.

8. Vorrichtung nach Anspruch 7,
**dadurch gekennzeichnet,**
**dass** der in Förderrichtung V vorderste Übergabeförderer (66) einer Übergabeeinheit (64) die kürzeste Förderstrecke der Übergabeeinheit und der in Förderrichtung V hinterste Übergabeförderer (71) die längste Förderstrecke der Übergabeeinheit (64) ausbildet.

9. Vorrichtung nach einem der Ansprüche 7 oder 8, **dadurch gekennzeichnet,**
**dass** jeder Übergabeeinheit 64 einer der Hälfte der Anzahl der Übergabeförderer entsprechende Anzahl von Produktförderern zugeordnet ist.

10. Vorrichtung nach Anspruch 6 und einem der Ansprüche 7 bis 9, **dadurch gekennzeichnet,**
**dass** die Anzahl der Übergabeeinheiten (64) der Produktübergabeeinrichtung (65) der Anzahl der in quer zur Förderrichtung V ausgerichteten Spalten angeordneten Formstempeln (80) eines Formwerkzeugs (79) der Thermoformeinrichtung mit in Matrixform angeordneten Formstempeln entspricht, und die Anzahl der Übergabeförderer (66 bis 71) der Übergabeeinheiten (64) der Anzahl der in Förderrichtung V ausgerichteten Reihen der Formstempel (80) entspricht.

11. Vorrichtung nach einem der Ansprüche 5 bis 10,
**dadurch gekennzeichnet,**
**dass** die Umverteilungseinrichtung (37) als eine in der Horizontalebene verschwenkbare Fördereinrichtung ausgebildet ist.

12. Vorrichtung nach Anspruch 11,
**dadurch gekennzeichnet,**
**dass** die Fördereinrichtung als Förderbandeinrichtung (39) ausgebildet ist.

13. Vorrichtung nach einem der Ansprüche 5 bis 12,
**dadurch gekennzeichnet,**
**dass** die Synchronisierungseinrichtung (50) der Übergabeförderer (41, 42) der Produktübergabeeinrichtung (34) als eine um eine horizontale Achse (48) in Förderrichtung der Übergabeförderer verschwenkbare Anschlageinrichtung (49) ausgebildet ist.

14. Vorrichtung nach einem der Ansprüche 5 bis 12, **dadurch gekennzeichnet,**
**dass** die Synchronisierungseinrichtung (52) der Übergabeförderer (41, 42) als eine oberhalb der Übergabeförderer angeordnete und in Förderrichtung umlaufende Förderbandeinrichtung (51) ausgebildet ist,
die zumindest zwei in ihrem Abstand zueinander veränderbare und unabhängig voneinander bewegbare Anschlageinrichtungen (53) aufweist.

15. Vorrichtung nach einem der Ansprüche 5 bis 14,
**dadurch gekennzeichnet,**
**dass** zur Einfüllung von Produktportionen (47) vom Übergabeende (72) der Übergabeförderer (41, 42) in einen Verpackungsbehälter (35, 75) der Verpackungseinheit (81) ein Einführungselement (55) vorgesehen ist.

16. Vorrichtung nach Anspruch 15,
**dadurch gekennzeichnet,**
**dass** das Einführungselement (55) um eine horizontale Achse verschwenkbar ist.

17. Vorrichtung nach Anspruch 16,
**dadurch gekennzeichnet,**
**dass** das Einführungselement (55) zwischen einem Übergabeende (72) des Übergabeförderers (41, 42) und einem die Förderstrecke des Übergabeförderers verlängernden Weiterführungselement (104) angeordnet ist, derart, dass das Einführungselement (55) zwischen einer Einfüllposition zur Einfüllung der Produktportionen (47) in den Verpackungsbehälter (35, 75) und einer Weiterführungsposition zur Weiterführung der Produktportionen (47) verschwenkbar ist.

## Claims

1. A method for portion packaging of flat products, such as potato chips, in which the products are conveyed as product portions (47) along a plurality of product conveying sections (33), which are disposed adjacent next to each other, to a product transfer device (34) for transferring the product portions (47) into packaging containers (35, 75), wherein, between each product conveying section and two transfer conveyors (41, 42) of the product transfer device (34), which are disposed adjacent next to each other, the product portions (47) delivered via the product conveying section are distributed to the transfer conveyors (41, 42) by means of a redistributing device (37, 58) in such a manner that during occurrence of a conveying gap between two product portions (47) conveyed on the product conveying section (33), the redistributing device (37, 58) is switched from a first connection configuration for establishing a conveying connection between the product conveying section (33) and the first transfer conveyor (41) and a second connection configuration for establishing a conveying connection between the product conveying section (33) and the second transfer conveyor (42), the speed of the product portions (47) on conveying sections of different lengths of the transfer conveyors (41, 42) being influenced by means of a synchronizer (50, 52) in such a manner that at the end of a feed cycle of a packaging unit (81), which comprises packaging containers (35, 75) disposed in columns and rows of a packaging container matrix of the packaging unit and is moved forward in a clocked manner along a packaging conveying section (77) transversely to the product conveying sections (33), the product portions (47) are transferred from a transfer position into the packaging containers (35, 75).

2. The method according to claim 1,
**characterised in that**
the feed motion carried out along the packaging conveying section (77) in the feed cycle corresponds to the product of the column spacing a of the packaging container matrix and the number of columns of the packaging container matrix.

3. The method according to claim 2,
**characterised in that**
during conveying of the product portions (47) on the transfer conveyors (41, 42), packaging units (81) are produced in a packaging container production portion (76) of the packaging conveying section (77).

4. The method according to claim 3,
**characterised in that**
in the packaging container production portion (76) of the packaging conveying section (77), packaging units (81) comprising packaging containers (75) disposed in a packaging container matrix are produced out of plastic film in a thermoforming process, and once a packaging container unit (81) has been produced, are moved forward in a clocked manner into a product transfer area (73) of the product transfer device (78) by a feed motion corresponding to the product of the column spacing a and the number of columns.

5. A device for portion packaging of flat products, such as potato chips, the device having a plurality of product conveying sections (33), which are disposed adjacent next to each other and serve to convey product portions (47), and a product transfer device (34, 78) for transferring the product portions (47) into packaging containers (35, 75), a redistributing device (37, 58) being provided between each product conveying section (33) and two transfer conveyors (41, 42), which are disposed adjacent next to each other, said redistributing device (37, 58) being switchable between a first connection configuration for establishing a conveying connection between the product conveying section (33) and the first transfer conveyor (41) and a second connection configuration for establishing a conveying connection between the product conveying section (33) and the second transfer conveyor (42), the transfer conveyors (41, 42) of the product transfer device (34), which have conveying sections of different lengths, each being provided with a synchronizer (50, 52) for synchronized arrival of the product portions (47) in a transfer position at a transfer end (72) of the transfer conveyors (41, 42), and with a packaging conveyor for clocked conveying of packaging units (81), which comprise packaging containers (75) disposed in a packaging container matrix, along a packaging conveying section (77) disposed transversely to the product conveying sections.

6. The device according to claim 5,
**characterised in that**
a thermoforming device for producing packaging units (81) comprising packaging containers (75) disposed in a packaging container matrix out of plastic film is provided in a packaging container production portion (76) of the packaging conveying section (77).

7. The device according to claim 5 or 6,
**characterised in that**
the product transfer device (34, 78) has at least one transfer unit (64) comprising a plurality of transfer conveyors (41, 42) forming conveying sections of different lengths in such a manner that the transfer ends (72) of the transfer conveyors (41, 42) are disposed on a transfer line which is inclined at a transfer angle α relative to the conveying direction V of the packaging conveyor.

8. The device according to claim 7,
**characterised in that**
the foremost transfer conveyor (66) of a transfer unit (64) in the conveying direction V forms the shortest conveying section of the transfer unit, and the rearmost transfer conveyor (71) in the conveying direction V forms the longest conveying section of the transfer unit (64).

9. The device according to any one of claims 7 or 8,
**characterised in that**
a number of product conveyors corresponding to half of the number of transfer conveyors is assigned to each transfer unit (64).

10. The device according to claim 6 and to any one of claims 7 to 9,
**characterised in that**
the number of transfer units (64) of the product transfer device (65) corresponds to the number of forming stamps (80) of a forming tool (79) of the thermoforming unit comprising forming stamps disposed in the form of a matrix which are disposed in columns oriented transversely to the conveying direction V, and the number of transfer conveyors (66 to 71) of the transfer units (64) corresponds to the number of rows of the forming stamps (80), which are oriented in the conveying direction V.

11. The device according to any one of claims 5 to 10,
**characterised in that**
the redistributing device (37) is realized as a conveying device that can be pivoted in the horizontal plane.

12. The device according to claim 11,
**characterised in that**
the conveying device is realized as a conveyor belt device (39).

13. The device according to any one of claims 5 to 12,
**characterised in that**
the synchronizer (50) of the transfer conveyors (41, 42) of the product transfer device (34) is realized as a stop device (49) that can be pivoted about a horizontal axis (48) in the conveying direction of the transfer conveyors.

14. The device according to any one of claims 5 to 12,
**characterised in that**
the synchronizer (52) of the transfer conveyors (41, 42) is realized as a conveyor belt device (51) which is disposed above the transfer conveyors and which circulates in the conveying direction and which has at least two stop devices (53) whose mutual distance can be changed and which can be moved independently of each other.

15. The device according to any one of claims 5 to 14,
**characterised in that**
an introducing element (55) is provided for filling product portions (47) from the transfer end (72) of the transfer conveyors (41, 42) into a packaging container (35, 75) of the packaging unit (81).

16. The device according to claim 15,
**characterised in that**
the introducing element (55) can be pivoted about a horizontal axis.

17. The device according to claim 16,
**characterised in that**
the introducing element (55) is disposed between a transfer end (72) of the transfer conveyor (41, 42) and a move-along element (104), which extends the conveying section of the transfer conveyor, in such a manner that the introducing element (55) can be pivoted between a filling position for filling the product portions (47) into the packaging container (35, 75) and a move-along position for moving the product portions (47) along.

## Revendications

1. Procédé pour emballer des produits plats, tels que des chips, en portions, dans lequel les produits sont transportés comme portions du produit (47) le long d'une pluralité de chemins de transport de produits (33), qui sont disposés de façon à être voisins côté à côté, vers une installation de transfert de produits (34) pour transférer les portions du produit (47) dans des récipients d'emballage (35, 75), dans lequel, entre chaque chemin de transport de produits et deux transporteurs de transfert (41, 42) de l'installation de transfert de produits (34) disposés de façon à être voisins côté à côté, une installation de redistribution (37, 58) répartit les portions du produit (47) acheminées par voie du chemin de transport de produits sur les transporteurs de transfert (41, 42) de telle manière que lors d'une apparition d'une lacune de transport entre deux portions du produit (47) transportées sur le chemin de transport de produits (33), l'installation de redistribution (37, 58) est passée d'une première configuration de connexion pour établir une connexion de transport entre le chemin de transport de produits (33) et le premier transporteur de transfert (41) et une deuxième configuration de connexion pour établir une connexion de transport entre le chemin de transport de produits (33) et le deuxième transporteur de transfert (42), la vitesse des portions du produit (47) sur des chemins de transport des transporteurs de transfert (41, 42) de longueurs différentes étant influencée au moyen d'un synchroniseur (50, 52) de telle manière que les portions du produit (47), à la fin d'un cycle d'avance d'une unité d'emballage (81) qui comporte des récipients d'emballage (35, 75) disposés en colonnes et lignes d'une matrice de récipients d'emballage de l'unité d'emballage et est avancée de façon cadencée le long d'un chemin de transport d'emballage (77) en travers des chemins de transport de produits (33), sont transférées d'une position de transfert dans les récipients d'emballage (35, 75).

2. Procédé selon la revendication 1,
**caractérisé en ce que**
le mouvement d'avance exécuté le long du chemin de transport d'emballage (77) dans le cycle d'avance correspond au produit de l'espacement de colonnes a de la matrice de récipients d'emballage et du nombre de colonnes de la matrice de récipients d'emballage.

3. Procédé selon la revendication 2,
**caractérisé en ce que**
lors du transport des portions du produit (47) sur les transporteurs de transfert (41, 42), des unités d'emballage (81) sont produites dans une section de production de récipients d'emballage (76) du chemin de transport d'emballage (77).

4. Procédé selon la revendication 3,
**caractérisé en ce que**
dans la section de production de récipients d'emballage (76) du chemin de transport d'emballage (77), des unités d'emballage (81) comportant des récipients d'emballage (75) disposés dans une matrice de récipients d'emballage sont produites à partir d'un film plastique dans un processus de thermoformage et, chaque fois une unité de récipient d'emballage (81) a été produite, sont avancées de façon cadencée dans une région de transfert de produits (73) de l'installation de transfert de produits (78) d'un mouvement d'avance qui correspond au produit de l'espacement de colonnes a et du nombre de colonnes.

5. Dispositif pour emballer des produits plats, tels que des chips, en portions, ledit dispositif présentant une pluralité de chemins de transport de produits (33) qui sont disposés de façon à être voisins côté à côté et qui servent à transporter des portions du produit (47) et une installation de transfert de produits (34, 78) pour transférer les portions du produit (47) dans des récipients d'emballage (35, 75), une installation de redistribution (37, 58) étant prévue entre chaque chemin de transport de produits (33) et deux transporteurs de transfert (41, 42) qui sont disposés de façon à être voisins côté à côté, ladite installation de redistribution (37, 58) pouvant être passée entre une première configuration de connexion pour établir une connexion de transport entre le chemin de transport de produits (33) et le premier transporteur de transfert (41) et une deuxième configuration de connexion pour établir une connexion de transport entre le chemin de transport de produits (33) et le deuxième transporteur de transfert (42), les transporteurs de transfert (41, 42) de l'installation de transfert de produits (34), qui présentent des chemins de transport de longueurs différentes, étant pourvus chacun d'un synchroniseur (50, 52) pour l'arrivée synchronisée des portions du produit (47) dans une position de transfert à une extrémité de transfert (72) des transporteurs de transfert (41, 42), et étant pourvus d'un transporteur d'emballage pour le transport cadencé d'unités d'emballage (81), qui comportent des récipients d'emballage (75) disposés dans une matrice de récipients d'emballage, le long d'un chemin de transport d'emballage (77) disposé en travers des chemins de transport de produits.

6. Dispositif selon la revendication 5,
**caractérisé en ce**
**qu'**un dispositif de thermoformage pour produire des unités d'emballage (81) comportant des récipients d'emballage (75) disposés dans une matrice de récipients d'emballage à partir d'un film plastique est prévu dans une section de production de récipients d'emballage (76) du chemin de transport d'emballage (77).

7. Dispositif selon la revendication 5 ou 6,
**caractérisé en ce que**
l'installation de transfert de produits (34, 78) présente au moins une unité de transfert (64) comportant une pluralité de transporteurs de transfert (41, 42) formant des chemins de transport de longueurs différentes, de telle manière que les extrémités de transfert (72) des transporteurs de transfert (41, 42) sont disposées sur une ligne de transfert inclinée sous un angle de transfert α par rapport à la direction de transport V du transporteur d'emballage.

8. Dispositif selon la revendication 7,
**caractérisé en ce que**
le premier transporteur de transfert (66) d'une unité de transfert (64) dans la direction de transport V forme le chemin de transport le plus court de l'unité de transfert et le dernier transporteur de transfert (71) dans la direction de transport V forme le chemin de transport le plus long de l'unité de transfert (64).

9. Dispositif selon l'une quelconque des revendications 7 ou 8,
**caractérisé en ce**
**qu'**un nombre de transporteurs de produits qui correspond à la moitié du nombre de transporteurs de transfert est attribué à chaque unité de transfert (64).

10. Dispositif selon la revendication 6 et selon l'une quelconque des revendications 7 à 9,
**caractérisé en ce que**
le nombre d'unités de transfert (64) de l'installation de transfert de produits (65) correspond au nombre de poinçons de formage (80) d'un outil de formage (79) de l'installation de thermoformage comportant des poinçons de formage disposés en forme de matrice, lesdits poinçons de formage (80) étant disposés dans des colonnes orientés en travers de la direction de transport V, et **en ce que** le nombre de transporteurs de transfert (66 à 71) des unités de transfert (64) correspond au nombre de lignes des poinçons de formage (80) orientées dans la direction de transport V.

11. Dispositif selon l'une quelconque des revendications 5 à 10,
**caractérisé en ce que**
l'installation de redistribution (37) est réalisée comme installation de transport qui peut être pivotée dans le plan horizontal.

12. Dispositif selon la revendication 11,
**caractérisé en ce que**
l'installation de transport est réalisé comme installation de bande transporteuse (39).

13. Dispositif selon l'une quelconque des revendications 5 à 12,
**caractérisé en ce que**
le synchroniseur (50) des transporteurs de transfert (41, 42) de l'installation de transfert de produits (34) est réalisé comme installation de butée (49) qui peut être pivotée autour d'un axe horizontal (48) dans la direction de transport des transporteurs de transfert.

14. Dispositif selon l'une quelconque des revendications 5 à 12,
**caractérisé en ce que**
le synchroniseur (52) des transporteurs de transfert (41, 42) est réalisé comme installation de bande transporteuse (51) qui est disposée au-dessus des transporteurs de transfert et qui circule dans la direction de transport et qui présente au moins deux installations de butée (53), la distance entre lesdites installations de butée (53) pouvant être modifiée et lesdites installations de butée (53) pouvant être déplacées séparément l'une de l'autre.

15. Dispositif selon l'une quelconque des revendications 5 à 14,
**caractérisé en ce**
**qu'**un élément d'insertion (55) est prévu pour verser des portions du produit (47) à partir de l'extrémité de transfert (72) des transporteurs de transfert (41, 42) dans un récipient d'emballage (35, 75) de l'unité d'emballage (81).

16. Dispositif selon la revendication 15,
**caractérisé en ce que**
l'élément d'insertion (55) peut être pivoté autour d'un axe horizontal.

17. Dispositif selon la revendication 16,
**caractérisé en ce que**
l'élément d'insertion (55) est disposé entre une extrémité de transfert (72) du transporteur de transfert (41, 42) et un élément de continuation (104) qui prolonge le chemin de transport du transporteur de transfert, de telle manière que l'élément d'insertion (55) peut être pivoté entre une position de remplissage pour verser les portions du produit (47) dans le récipient d'emballage (35, 75) et une position de continuation pour faire avancer les portions du produit (47).
